# EUROPEAN PATENT APPLICATION

(11) **EP 3 006 876 A1**
(43) Date of publication of application: **13.04.2016**
(21) Application number: 14807178.0
(22) Date of filing: 26.05.2014
(51) Int. Cl.: F26B 17/20, B09B 3/00, C02F 11/10, C02F 11/12, F26B 21/00

(54) **DRYING/CARBONIZING DEVICE AND METHOD THEREFOR**

(30) Priority: 03.06.2013 JP 2013116995
(71) Applicant: Mutsuwa Kogyo Kabushiki Kaisha, Kanagawa 212-0808 (JP)
(72) Inventor: OYAMA, Toshio, Kawasaki-shi Kanagawa 210-0808 (JP); HOSHI, Masami, Kawasaki-shi Kanagawa 210-0013 (JP)
(74) Representative: Hoffmann Eitle
(86) International application number: PCT/JP2014/002767
(87) International publication number: WO 2014/196153

(57) **Abstract**

The invention provides a drying and carbonization apparatus capable of efficiently removing moisture in raw garbage and a drying and carbonization method.

The drying and carbonization apparatus of an example includes, in a drying chamber, plural cylindrical bodies provided with an input port at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof, a pair of horizontal pulling pipes connected on both sides of the plural cylindrical bodies at a proper interval in a longitudinal direction of the plural cylindrical bodies and an upper half part of the plurality of cylindrical bodies, a vertical pulling pipe connected to each of tips of the pair of horizontal pulling pipes and provided in a vertical direction, an upper step common discharge box commonly connected to a vertical pulling pipe connected to a horizontal pulling pipe connected to a cylindrical body of an upper step, and a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step.

## Description

### TECHNICAL FIELD

An embodiment of the present invention relates to a drying and carbonization apparatus which can effectively heat and efficiently dry and carbonize the matter to be dried (collectively referred to as raw garbage) with a great amount of moisture, such as raw garbage, sludge from the sewage treatment plant, fowl droppings, and food waste such as bean curd refuse and can take out gas that can be used as a fuel, and a drying and carbonization method.

### BACKGROUND ART

In the raw garbage dryer of the prior art, the raw garbage is accommodated in the drying chamber and dried by stirring or the garbage is dried as it passes through the drying chamber.

However, raw garbage contains a great amount of moisture, and thus it is required to be sufficiently dried in the case of utilizing the raw garbage as a solid fuel, or the like. However, a large-sized drying chamber is required in order to dry the raw garbage for a long period of time by a method of the prior art, and thus there is a problem that the installation space for the drying chamber increases and the amount of fuel consumed also increases. In addition, there is a problem regarding the environmental problem that the pollution is caused as hazardous substances contained in the combustion gas are released into the atmosphere.

Meanwhile, sludge from the sewage treatment plant, fowl droppings, and food waste such as bean curd refuse other than raw garbage are, for example, dried in the sun or air-dried in the case of not using a dryer, but the efficiency is significantly poor.

A raw garbage dryer for drying the raw garbage that is sorted by a garbage sorting machine and crushed is disclosed in Patent Document 1.

### CITATION LIST

### PATENT DOCUMENT

Patent Document 1: JP 2012-87988 A

### SUMMARY OF THE INVENTION

### PROBLEM TO BE SOLVED BY THE INVENTION

An object of the invention is to provide a drying and carbonization apparatus capable of efficiently removing moisture in raw garbage and a drying and carbonization method.

### MEANS FOR SOLVING PROBLEM

In order to solve the above problem, in one example, there is provided a drying and carbonization apparatus which includes, in a drying chamber, a plurality of cylindrical bodies provided with an input port at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof, a pair of horizontal pulling pipes connected on both sides of the plurality of cylindrical bodies at a proper interval in a longitudinal direction of the plurality of cylindrical bodies and an upper half part of the plurality of cylindrical bodies, a vertical pulling pipe connected to each of tips of the pair of horizontal pulling pipes and provided in a vertical direction, an upper step common discharge box commonly connected to a vertical pulling pipe connected to a horizontal pulling pipe connected to a cylindrical body of an upper step, and a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step.

### BRIEF DESCRIPTION OF DRAWINGS

Fig. 1 is a diagram illustrating a schematic structure of an embodiment;
Fig. 2 is a schematic diagram of the apparatus of an embodiment illustrated in Fig. 1 viewed in the A direction;
Fig. 3 is a diagram for describing the configuration of three lower steps of the apparatus of an embodiment;
Fig. 4 is a schematic diagram of a cylindrical body of the uppermost step of the apparatus of an embodiment illustrated in Fig. 1 viewed from above;
Fig. 5 is a diagram illustrating the connection relation between the cylindrical body illustrated in Fig. 4 and the horizontal pulling pipe, and the like;
Fig. 6 is a schematic diagram of the cylindrical body of the lowermost step of the apparatus of an embodiment illustrated in Fig. 1 viewed from above;
Fig. 7 is a plan view illustrating the inlet structure of a common discharge box corresponding to the cylindrical bodies of the three upper steps in an embodiment;
Fig. 8 is a plan view illustrating the inlet structure of the common discharge box corresponding to the cylindrical bodies of the three lower steps in an embodiment;
Fig. 9 is a diagram illustrating a configuration example of a control unit of an embodiment; and
Fig. 10 is diagram for describing a state in which raw garbage is transported through the inside of the cylindrical bodies in an embodiment.

### MODE(S) FOR CARRYING OUT THE INVENTION

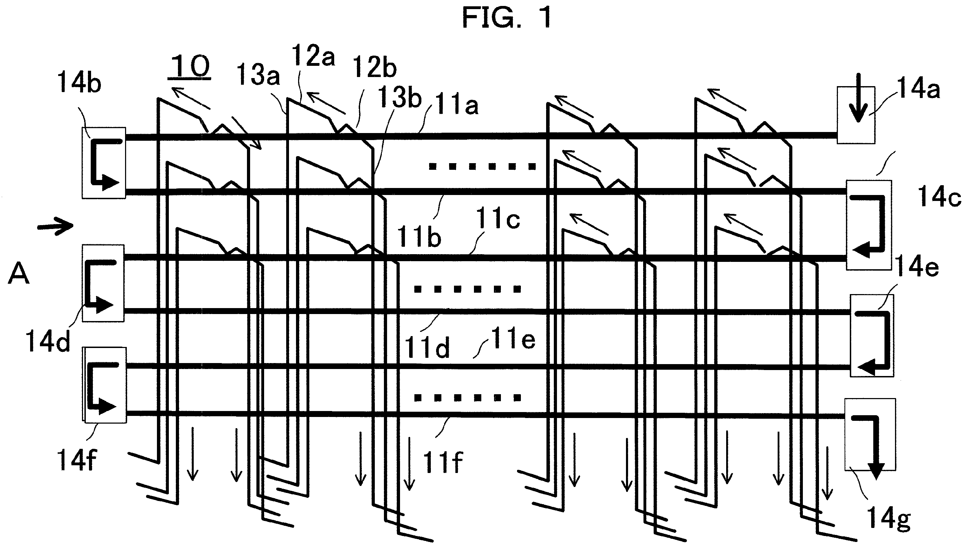

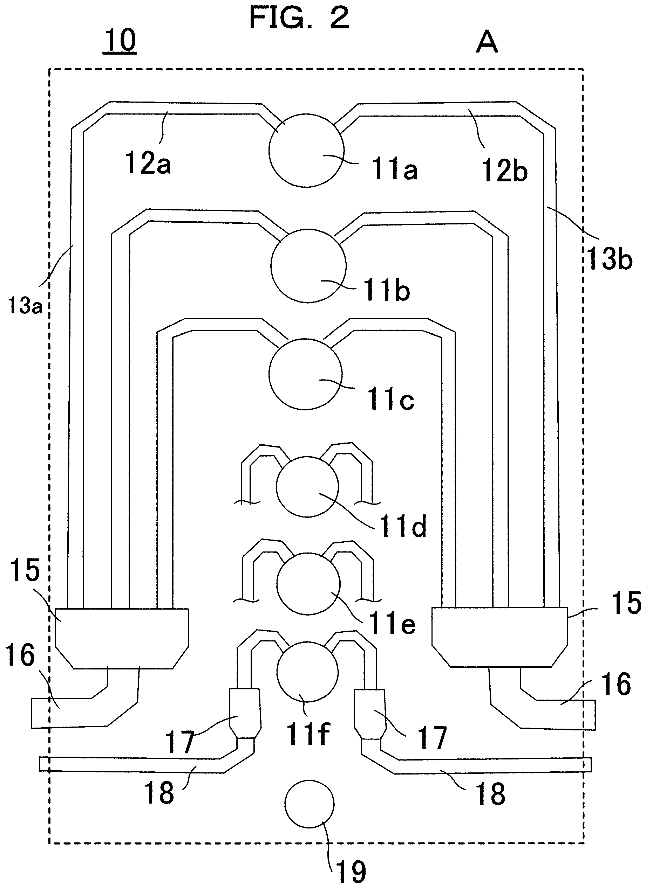

Hereinafter, embodiments of the invention will be described with reference to the accompanying drawings. The schematic entire structure of an embodiment is illustrated in Fig. 1, and a schematic configuration of a part thereof is illustrated in Fig. 2. This drying and carbonization apparatus 10 roughly includes, for example, six cylindrical bodies 11a, 11b, 11c, 11d, 11e, and 11f that convey a matter to be dried in the transverse direction and are disposed in the vertical direction, horizontal pulling pipes 12a and 12b that are symmetrically provided at a plurality of positions of the upper portion of each of these cylindrical bodies, vertical pulling pipes 13a and 13b that are provided vertically below from the other end of these horizontal pulling pipes 12, a raw garbage input box 14a that is provided at one end of the cylindrical body 11a of the uppermost step, connecting boxes 14b, 14c, 14d, 14e, and 14f that connect the other end of the cylindrical body of the uppermost step, one end and the other end of each cylindrical body of the second step and the following steps and introduce the matter to be dried into the inlet of the cylindrical body of the next step, and a dried matter discharge box 14g that is provided at the other end of the cylindrical body 11f of the lowermost step.

Incidentally, although it is not illustrated, an input port led to the outside of the drying chamber is provided at the upper part of the input box 14a, and a pressing cylinder to push the raw garbage that is input through the input port at the upper part thereof into the cylindrical body 11a is provided. In addition, a discharge port is provided on the lower surface of the discharge box 14g, and a belt conveyor for transporting the matter to be dried is provided at the lower part thereof.

The horizontal pulling pipe provided to each cylindrical body basically has an M-letter shape as illustrated in Fig. 2. Each cylindrical body has a cylindrical shape, and the inner diameter of the cylindrical body 11a of the uppermost step, the cylindrical body 11b of the second step, and the cylindrical body 11c of the third step is slightly larger than the diameter (inner diameter) of the cylindrical body 11d of the fourth step, the cylindrical body 11e of the fifth step, and the cylindrical body 11f of the lowermost step.

One end of the horizontal pulling pipe is connected to two positions of left and right at the upper portion than the upper half of the periphery of the cylindrical body. For example, the horizontal pulling pipes 12a and 12b of the cylindrical body 11a of the uppermost step, the cylindrical body 11b of the second step, and the cylindrical body 11c of the third step are connected at eight positions along the longitudinal direction of the cylindrical body. The horizontal pulling pipes 12a and 12b that are connected to these cylindrical bodies are each connected to the vertical pulling pipes 13a and 13b, and the other end of the vertical pulling pipe is connected to a corresponding upper step common discharge box 15 at the lower part. The gas and the like that has arrived at the upper step common discharge box 15 are derived to the outside of the drying chamber by a conduit 16.

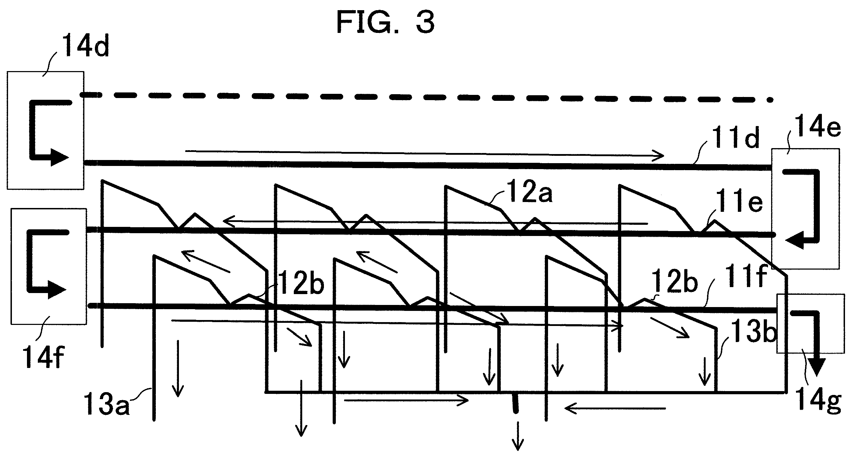

Meanwhile, the horizontal pulling pipe is connected to the cylindrical bodies 11d, 11e, and 11f that are disposed at the lower part of these cylindrical bodies 11a, 11b, and 11c, for example, at six positions, four positions, and three positions, respectively. The appearance that the horizontal pulling pipes 12a and 12b are connected to the cylindrical body 11f of the lowermost step at three positions is illustrated in Fig. 3. Both of the horizontal pulling pipes 12a and 12b are connected to the location at the upper half part of each cylindrical body. The reason that the horizontal pulling pipe is connected at the upper half part of the cylindrical body is to prevent the raw garbage from being sucked into the horizontal pulling pipe.

One end of the corresponding vertical pulling pipe is connected to the corresponding horizontal pulling pipe, but the other end of the vertical pulling pipe is connected to the lower step common discharge box 17 extending in the cylindrical body direction. The gas and the like that are collected in this lower step common discharge box 17 are directed to the outside of the drying chamber by a conduit 18. A burner 19 is provided to the lower portion of the cylindrical body 11f at the lower part of this drying and carbonization apparatus 10 and raises the temperature of the entire drying chamber to promote drying and carbonization.

Although it is not illustrated, the cylindrical body 11d of the fourth step and the cylindrical body 11e of the fifth step are also connected to the lower step common discharge box 17 in the same manner except that the number of connection positions of the horizontal pulling pipes differ, and the gas and the like that are collected are directed to the outside of the drying chamber (drying and carbonization apparatus).

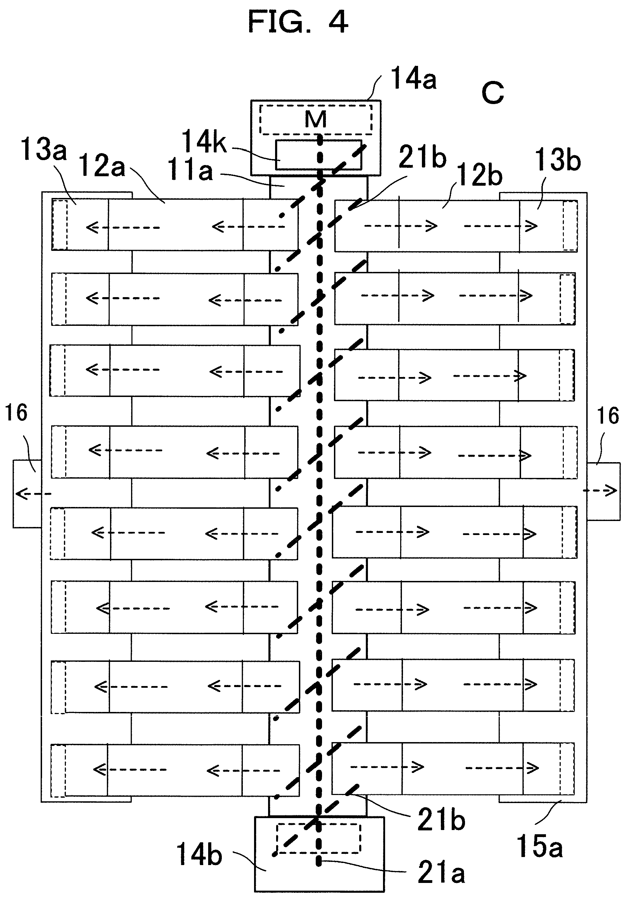

The top view illustrating the relation between the cylindrical body of the uppermost step and the horizontal pulling pipe is illustrated in Fig. 4. As illustrated in Fig. 4, the horizontal pulling pipes 12a and 12b are connected to the cylindrical body 11a at eight positions.

Each cylindrical body has a screw conveyor 21 structure capable of rotating a spiral-shaped screw blade 21b around a screw shaft 21a. The raw garbage transported is stirred by this screw blade 21b, and thus the effect of moisture evaporation increases.

The raw garbage input box 14a that is connected to the cylindrical body 11a includes a motor M to rotate the screw blade of the screw conveyor and an inlet 14k to accept the raw garbage (matter to be dried) to be pushed thereinto from the upper part. The connecting boxes 14b, 14c, 14d, 14e, 14f that are connected to each cylindrical body are also the same except that the inlet thereof is connected to the outlet of the upper step and the outlet thereof corresponds to the inlet of the cylindrical body of a lower step. The dried matter discharge box 14g that is provided at the outlet end of the cylindrical body 11f also has the same structure, but the dried matter that is discharged thereto is discharged to the outside of the drying chamber.

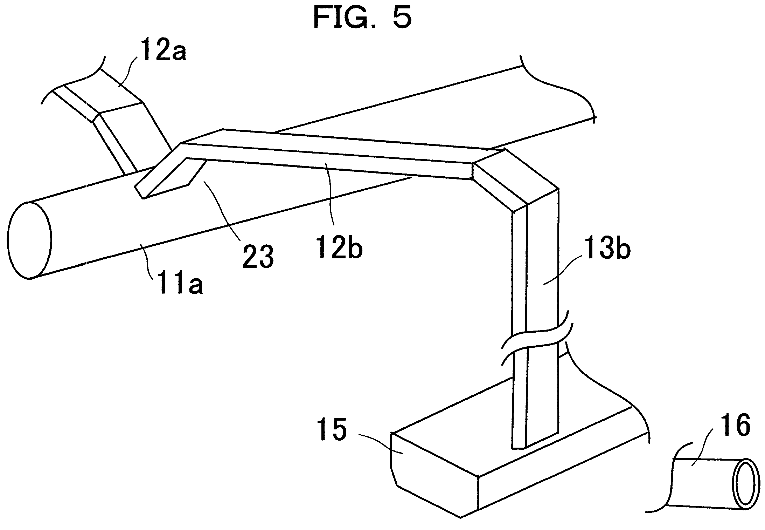

The appearance that the horizontal pulling pipes 12a and 12b are connected to the cylindrical body 11a is illustrated in Fig. 5. As illustrated in Fig. 5, the cross section of the horizontal pulling pipes 12a and 12b has a flat rectangular shape in the longitudinal direction of the cylindrical body. The horizontal pulling pipes 12a and 12b are approximately symmetrically connected to the upper half part of the cylindrical body. There is an effect that the connection is facilitated and moreover the gas, air, and the like can be efficiently sucked when the connecting portion of the horizontal pulling pipe to the cylindrical body has a flat rectangular shape in the longitudinal direction of the cylindrical body.

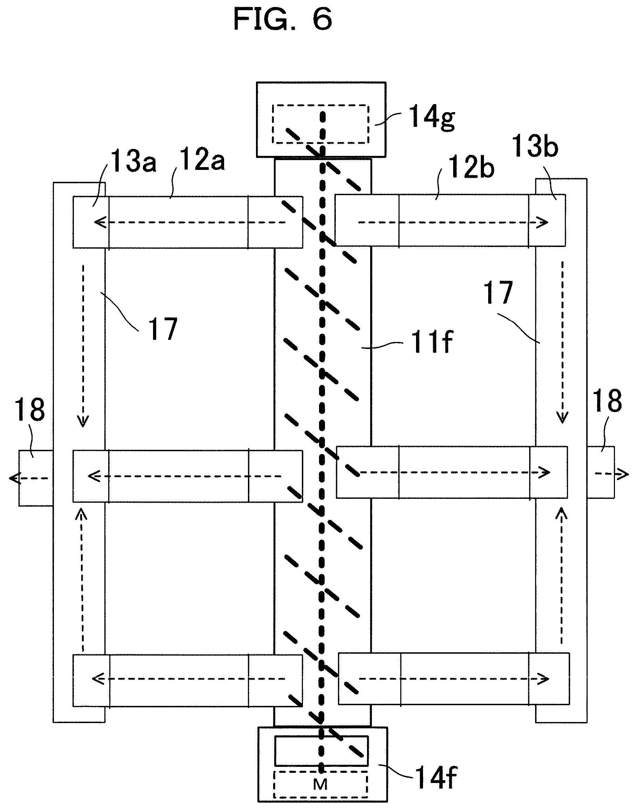

The view of the appearance of the connection relation between the cylindrical body 11f of the lowermost step and the horizontal pulling pipes 12a and 12b viewed from above is illustrated in Fig. 6. The horizontal pulling pipes 12a and 12b are connected to the cylindrical body 11f at three positions in the longitudinal direction thereof. The horizontal pulling pipe and the vertical pulling pipe that are connected to the cylindrical body 11e of the fifth step at the upper part thereof and the horizontal pulling pipe and the vertical pulling pipe that are connected to the cylindrical body 11d of the fourth step at the further upper part thereof are connected to the same common discharge box 17 as the vertical pulling pipe that is connected to the horizontal pulling pipe that is connected to the cylindrical body 11f (see Fig. 3).

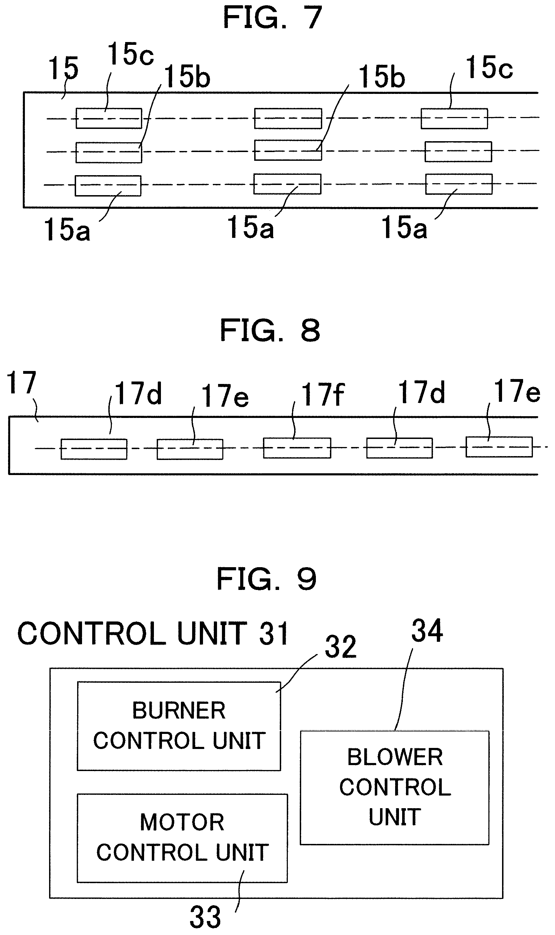

Here, the structure of the inlet of the common discharge box that is connected to the vertical pulling pipe will be described. The structure of the inlet of the upper step common discharge box 15 that is connected to the vertical pulling pipes 13a and 13b is illustrated in Fig. 7. In addition, the structure of the inlet of the lower step common discharge box 17 that is connected to the vertical pulling pipes 13a and 13b is illustrated in Fig. 8.

The horizontal pulling pipes that are connected to the cylindrical bodies 11a, 11b, and 11c of the three upper steps are as many as eight, eight, and, eight in one side, respectively, and thus many vertical pulling pipes are connected thereto. Hence, as illustrated in Fig. 7, inlets 15a, 15b, and 15c are provided to the upper step common discharge box 15 in three rows according to each of the cylindrical bodies 11a, 11b, and 11c and connected to the vertical pulling pipes on one side.

Meanwhile, the horizontal pulling pipes that are connected to the cylindrical bodies 11d, 11e, and 11f of the three lower steps are respectively six, four, and three in one side to be fewer as compared to the three upper steps. Hence, inlets 17d, 17e, and 17f are connected to the vertical pulling pipe 13b of one side and the lower step common discharge box 17 in one row according to the cylindrical bodies of the three steps.

A configuration example of a control unit to control this drying chamber is illustrated in Fig. 9. A control unit 31 includes a burner control unit 32 which controls the temperature of the burner 19, a motor control unit 33 which controls the rotational speed (phase shifting speed of raw garbage) of each motor M, and a blower control unit 34 which controls the strength of the suction of the blower, and the control of these units is conducted at the outside of the drying chamber (indicated by the dotted line in Fig. 2) by a control panel.

The other end of the vertical pulling pipe 13b is provided with the upper step common discharge box 15 in the horizontal direction, the conduit 16 is connected to the upper step common discharge box 15. By sucking through the tip of this conduit 16, the air, gas, and the like in the cylinder body 11a pass through the horizontal pulling pipe 12b, the vertical pulling pipe 13b, and the upper step common discharge box 15 and are directed to the outside of the drying chamber by the blower (not illustrated). In the vertical pulling pipe and the like that are connected to this cylindrical body 11a and the vertical pulling pipe and the like that are connected to other cylindrical bodies 11b and 11e as well, the gas and the like pass through the upper step common discharge box 15 and are directed to the outside of the drying chamber by the blower in the same manner. For example, the horizontal pulling pipe or the vertical pulling pipe, the common discharge box, and the like are made of stainless steel.

For three cylindrical bodies 11a, 11b, and 11c that are perpendicularly juxtaposed from the uppermost step in this manner, the upper step common discharge box 15 having the inlets in three rows is connected to the horizontal pulling pipe that is connected to the cylindrical bodies and the vertical pulling pipe that is connected to this horizontal pulling pipe.

Meanwhile, the vertical pulling pipes 13a and 13b corresponding to the cylindrical bodies 11d, 11e, and 11f of the three lower steps are connected to the lower step common discharge box 17 in one row, and the conduit 18 that is connected to the blower is provided in the front thereof.

Hence, the suction force for the gas and the like by the horizontal pulling pipe with respect to the cylindrical bodies of the three upper steps are significantly stronger than the three lower steps. The raw garbage is input into the raw garbage input box that is connected to the cylindrical body of the uppermost step, and the moisture is further removed as the raw garbage is transported to the lower step. Hence, the raw garbage is rapidly dried on the upper step when the suction force for the gas, steam, and the like is stronger on the upper step, and thus there is an advantage that the efficiency as a drying and carbonization apparatus is improved.

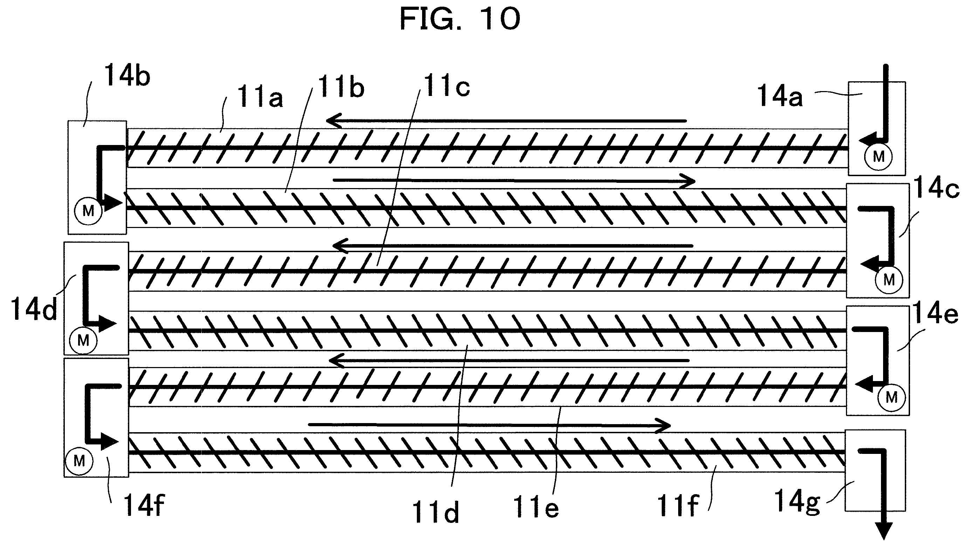

Next, the operation from the raw garbage is introduced into the drying and carbonization apparatus 10 of this embodiment until the raw garbage is discharged into the dried matter discharge box 14g will be described. The route that the raw garbage is introduced into the drying and carbonization apparatus 10 until it is taken out as a dried matter is illustrated in Fig. 10.

Prior to the start of operation of the drying and carbonization apparatus 10, the internal temperature of the drying chamber is adjusted by the burner 19 by the burner control unit 32 of the control unit 31 illustrated in Fig. 9, and the rotational speed of the motor is adjusted by the motor control unit 33 in consideration of the raw garbage moving speed by the screw conveyor of each cylindrical body. Furthermore, the blower is controlled by the blower control unit 34 in order to properly adjust the strength to suck the gas and air via each horizontal pulling pipe and each vertical pulling pipe.

Thereafter, the raw garbage is first input through the inlet of the raw garbage input box 14a. The input raw garbage is conveyed to the left side (direction indicated by the arrow) in the cylinder body 11a by a screw conveyor mechanism. At this time, as illustrated in Fig. 5, the gas, steam, and the like are absorbed into the horizontal pulling pipes 12a and 12b that are connected to the cylindrical body 11a at eight positions. For example, the temperature reaches about 650°C when the inside of the drying chamber is heated by the burner 19 and the raw garbage is transported. It is possible to save the fuel since heat retaining property is exhibited as well as to prevent deformation of the cylindrical body due to heat when the periphery of the cylindrical body is covered with fine granules such as glass or ceramics that is a heat resistant material.

The raw garbage that has been conveyed through the inside of the cylindrical body 11a is conveyed into the connecting box 14b and falls into the inlet of the cylindrical body 11b that is on the lower step thereof. The raw garbage introduced into the cylindrical body 11b is conveyed to the right side by rotation of the motor that is provided in the connecting box 14b. During this conveyance, the gas, air (steam), and the like are sucked into the horizontal pulling pipes 12a and 12b that are provided at eight positions of this cylindrical body 11b.

The raw garbage that has arrived at the outlet of the cylindrical body 11b falls from the connecting box 14c into the inlet of the cylindrical body 11c in the same manner. The fallen raw garbage is moved to the left side in the cylindrical body 11c by the motor that is provided in the connecting box 14c. At this time, the gas, air, and the like are sucked into the horizontal pulling pipes that are provided at eight positions of the cylindrical body 11c. The gas and the like that are sucked into the horizontal pulling pipes connected to the cylindrical bodies 11a, 11b, and 11c are sent to the upper step common discharge box 15 via the vertical pulling pipe and discharged to the outside of the drying chamber via the conduit by the blower.

Meanwhile, the raw garbage that has been conveyed to the connecting box 14d is transported to the right side in the cylindrical body 11d by the motor provided in the inside of this connecting box 14d. The horizontal pulling pipes are connected to the cylindrical body 11d at four positions, and the gas, air, and the like are sucked thereinto during the process to transport the raw garbage. In the same manner, the raw garbage is transported through the inside of the cylindrical bodies 11e and 11f by the screw conveyor mechanism, and the gas and air are sucked during the transportation. Consequently, the moisture of the raw garbage that had a great amount of moisture in the beginning is gradually removed and falls from the dried matter discharge box 14g as a dried matter. It is also possible not only to dry the raw garbage but also to carbonize the raw garbage by controlling the internal temperature of the drying chamber by the burner.

In the above embodiment, it is described that the common discharge box is connected to the conduit so as to suck from the outside by the blower. However, it is possible to provide an intermediate fan at this protruding portion so as to separate and utilize the sucked gas by the suction unit.

In the above embodiment, the screw blade is provided for each cylindrical body, but it is also possible to connect the screw blade of each cylindrical body to a belt or the like so as to drive these by a single motor.

In addition, in the above embodiment, six cylindrical bodies are provided, but it is not limited thereto. In addition, the connection positions of the horizontal pulling pipe on the cylindrical body is not limited to eight, six, four, and three, and in general, the connection positions may be more on the upper step and fewer on the lower step. The diameter of the cylindrical body may be larger on the upper step and smaller on the lower step.

As described above, according to the above embodiment, it is possible to dry raw garbage by removing the moisture contained therein so as to recover the raw garbage as a dried matter and also to obtain a gas discharged at that time.

As described above, the point that the discharge boxes that are connected to the cylindrical bodies are divided into the upper step and the lower step and connected to the common discharge box is a feature of the invention. Consequently, it is possible to strongly suck the gas, steam, and the like in the cylindrical body from the outside, and thus the effect of drying and the like of the raw garbage is great.

In addition, according to the above embodiment, the horizontal pulling pipe and the vertical pulling pipe that are connected to the cylindrical body of an upper step are commonly provided with the common discharge box having inlets in three rows, and the gas and the like are sucked from the outside. The raw garbage is introduced into the cylindrical body from the upper step, and thus the suction force strongly works in a state with a great amount of moisture and suction of moisture is likely to take place at the early stage. Consequently, the effect of drying and carbonization of the raw garbage is great as a whole drying and carbonization apparatus.

In the above embodiment, the upper step common discharge box has inlets in three rows and is connected to the vertical pulling pipe corresponding to the cylindrical bodies of the three upper steps, and the lower step common discharge box has an inlet in one row and is connected to the vertical pulling pipe corresponding to the cylindrical bodies of the three lower steps. However, these numbers are arbitrary to be one upper step, four lower steps, and the like, and the upper step common discharge box and the lower step common discharge box may be connected to the cylindrical body of a relatively upper or lower step. In addition, the number of rows of the inlet is also arbitrary.

An embodiment of the invention has been described, but these embodiments are presented as an example, and it is not intended to limit the scope of the invention. These novel embodiments may be implemented in other various forms . Without departing from the gist of the invention, these embodiments or their modifications are included in the scope or gist of the invention and also included in the invention described in the appended claims and the scope of its equivalents.

### EXPLANATIONS OF LETTERS OR NUMERALS

10 ... Drying and carbonization apparatus
11a, 11b, 11c, 11d, 11e, and 11f ... Cylindrical body
12a and 12b ... Horizontal pulling pipe
13a and 13b ... Vertical pulling pipe
14a ... Raw garbage input box
14b, 14c, 14d, 14e, and 14f ... Connecting box
14g ... Dried matter discharge box
12a and 12b ... Horizontal pulling pipe
13a and 13b ... Vertical pulling pipe
15 ... Upper step common discharge box
17 ... Lower step common discharge box
19 ... Burner
21 ... Screw conveyor
21a ... Screw shaft
21b ... Screw blade
31 ... Control unit
32 ... Burner control unit
33 ... Motor control unit
34 ... Blower control unit

## Claims

1. A drying and carbonization apparatus comprising, in a drying chamber:
a plurality of cylindrical bodies provided with an input port at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof;
a pair of horizontal pulling pipes connected on both sides of the plurality of cylindrical bodies at a proper interval in a longitudinal direction of the plurality of cylindrical bodies and an upper half part of the plurality of cylindrical bodies;
a vertical pulling pipe connected to each of tips of the pair of horizontal pulling pipes and provided in a vertical direction;
an upper step common discharge box commonly connected to a vertical pulling pipe connected to a horizontal pulling pipe connected to a cylindrical body of an upper step; and
a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step.

2. The drying and carbonization apparatus according to claim 1, wherein positions where the horizontal pulling pipe is connected to the cylindrical body are more in the cylindrical body of an upper step than in a the cylindrical body of a lower step.

3. The drying and carbonization apparatus according to claim 2, wherein a diameter of the cylindrical body of an upper step is larger than a diameter of the cylindrical body of a lower step.

4. The drying and carbonization apparatus according to claim 3, wherein a cross section of the horizontal pulling pipe connected to the cylindrical body has a rectangular shape in a longitudinal direction of the cylindrical body and the upper step common discharge box has inlets connected to the vertical pulling pipe in a plurality of rows.

5. The drying and carbonization apparatus according to claim 4, further comprising:
a connecting box provided at one end of an upper cylindrical body and a lower cylindrical body among the plurality of cylindrical bodies; and
a motor rotating a shaft of the screw conveyor so as to transport raw garbage being transported by the upper cylindrical body to a reverse direction by the lower cylindrical body.

6. The drying and carbonization apparatus according to claim 5, further comprising a burner in the drying chamber.

7. A drying and carbonization method comprising:
pulling out gas generated in a plurality cylindrical bodies provided with an input port at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof by a pair of horizontal pulling pipes connected on both sides of the plurality of cylindrical bodies at a proper interval in a longitudinal direction of the cylindrical bodies and an upper half part of the cylindrical bodies;
collecting the pulled out gas in an upper step common discharge box commonly connected to a vertical pulling pipe connected to a horizontal pulling pipe connected to a cylindrical body of an upper step via a vertical pulling pipe connected to each of tips of the pair of horizontal pulling pipes; and
collecting the gas in a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step to pull out the gas to the outside of the drying chamber.

8. The drying and carbonization method according to claim 7, wherein positions where the horizontal pulling pipe is connected to the cylindrical body are more in a cylindrical body of an upper step than in a cylindrical body of a lower step.

9. The drying and carbonization apparatus according to claim 8, wherein a diameter of the cylindrical body of an upper step is larger than a diameter of the cylindrical body of a lower step.

10. The drying and carbonization method according to claim 9, wherein a cross section of the horizontal pulling pipe connected to the cylindrical body has a rectangular shape in a longitudinal direction of the cylindrical body and the upper step common discharge box has inlets connected to the vertical pulling pipe in a plurality of rows.

11. The drying and carbonization method according to claim 10, wherein raw garbage is conveyed between cylindrical bodies by a connecting box provided at one end of an upper cylindrical body and a lower cylindrical body among the plurality of cylindrical bodies, and
the raw garbage being transported by the upper cylindrical body is transported to a reverse direction by the lower cylindrical body by a motor rotating a shaft of the screw conveyor.

12. The drying and carbonization method according to claim 11, wherein the inside of the drying chamber is heated by a burner.

## Amended claims

### Amended claims under Art. 19.1 PCT

1. (Amended) A drying and carbonization apparatus comprising, in a drying chamber:
a plurality of cylindrical bodies provided with an input port of raw garbage at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof;
a pair of horizontal pulling pipes connected on both sides of the plurality of cylindrical bodies at a proper interval in a longitudinal direction of the plurality of cylindrical bodies and an upper half part of the plurality of cylindrical bodies;
a vertical pulling pipe connected to each of tips of the pair of horizontal pulling pipes and provided in a vertical direction;
an upper step common discharge box commonly connected to a vertical pulling pipe connected to a horizontal pulling pipe connected to a cylindrical body of an upper step;
a first conduit directing gas generated in the cylindrical body of an upper step to the outside;
a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step; and
a second conduit directing gas generated in the cylindrical body of a lower step to the outside.

2. The drying and carbonization apparatus according to claim 1, wherein positions where the horizontal pulling pipe is connected to the cylindrical body are more in the cylindrical body of an upper step than in the cylindrical body of a lower step.

3. The drying and carbonization apparatus according to claim 2, wherein a diameter of the cylindrical body of an upper step is larger than a diameter of the cylindrical body of a lower step.

4. The drying and carbonization apparatus according to claim 3, wherein a cross section of the horizontal pulling pipe connected to the cylindrical body has a rectangular shape in a longitudinal direction of the cylindrical body and the upper step common discharge box has inlets connected to the vertical pulling pipe in a plurality of rows.

5. The drying and carbonization apparatus according to claim 4, further comprising:
a connecting box provided at one end of an upper cylindrical body and a lower cylindrical body among the plurality of cylindrical bodies; and
a motor rotating a shaft of the screw conveyor so as to transport raw garbage being transported by the upper cylindrical body to a reverse direction by the lower cylindrical body.

6. The drying and carbonization apparatus according to claim 5, further comprising a burner in the drying chamber.

7. (Amended) A drying and carbonization method comprising:
pulling out gas generated in a plurality of cylindrical bodies provided with an input port at one end portion and a discharge port at the other end portion, alternately communicated with an upper end portion or a lower end portion to be integrally formed, disposed in a vertical direction so that a forward path and a backward path are alternate at the top and the bottom, and have a screw conveyor in the inside thereof by a pair of horizontal pulling pipes connected on both sides of the plurality of cylindrical bodies at a proper interval in a longitudinal direction of the cylindrical bodies and an upper half part of the cylindrical bodies;
collecting the pulled out gas in an upper step common discharge box commonly connected to a vertical pulling pipe connected to a horizontal pulling pipe connected to a cylindrical body of an upper step via a vertical pulling pipe connected to each of tips of the pair of horizontal pulling pipes and discharging the gas generated in the cylindrical body of an upper step to the outside by a first conduit; and
collecting the gas in a lower step common discharge box commonly connected to a vertical pulling pipe connected to a horizontal pulling pipe connected to a cylindrical body of a lower step provided below the cylindrical body of an upper step and a vertical pulling pipe connected to a horizontal pulling pipe connected to a cylindrical body of a lower step provided below the cylindrical body of a lower step and pulling out the gas generated in the cylindrical body of a lower step to the outside of a drying chamber by a second conduit.

8. The drying and carbonization method according to claim 7, wherein positions where the horizontal pulling pipe is connected to the cylindrical body are more in a cylindrical body of an upper step than in a cylindrical body of a lower step.

9. The drying and carbonization apparatus according to claim 8, wherein a diameter of the cylindrical body of an upper step is larger than a diameter of the cylindrical body of a lower step.

10. The drying and carbonization method according to claim 9, wherein a cross section of the horizontal pulling pipe connected to the cylindrical body has a rectangular shape in a longitudinal direction of the cylindrical body and the upper step common discharge box has inlets connected to the vertical pulling pipe in a plurality of rows.

11. The drying and carbonization method according to claim 10, wherein raw garbage is conveyed between cylindrical bodies by a connecting box provided at one end of an upper cylindrical body and a lower cylindrical body among the plurality of cylindrical bodies, and
the raw garbage being transported by the upper cylindrical body is transported to a reverse direction by the lower cylindrical body by a motor rotating a shaft of the screw conveyor.

12. The drying and carbonization method according to claim 11, wherein the inside of the drying chamber is heated by a burner.
